# EUROPÄISCHE PATENTSCHRIFT

(11) **EP 1 224 723 B1**
(45) Veröffentlichungstag und Bekanntmachung des Hinweises auf die Patenterteilung: **10.08.2005**
(21) Anmeldenummer: 01955254.6
(22) Anmeldetag: 17.07.2001
(51) Int. Cl.: H02K 3/34

(54) **ISOLIERELEMENT UND VERFAHREN ZUM EINBRINGEN VON WICKLUNGSELEMENTEN IN DIE NUTEN EINES ANKERS**
INSULATION ELEMENT AND METHOD FOR INTRODUCING WINDING ELEMENTS INTO THE GROOVES ON AN ARMATURE
ELEMENT D'ISOLATION ET PROCEDE POUR INTRODUIRE DES ELEMENTS D'ENROULEMENT DANS LES RAINURES D'UN INDUIT

(30) Priorität: 12.09.2000 DE 10044937
(43) Veröffentlichungstag der Anmeldung: 24.07.2002
(73) Patentinhaber: ROBERT BOSCH GMBH, 70442 Stuttgart (DE)
(72) Erfinder: SIEMS, Hans-Dieter, 71735 Eberdingen (DE); ANTL, Oswald, 73252 Lenningen (DE)
(86) Internationale Anmeldenummer: PCT/DE2001/002671
(87) Internationale Veröffentlichungsnummer: WO 2002/023697

(56) Entgegenhaltungen:
- FR-A- 2 328 318
- US-A- 4 028 573
- US-A- 5 729 885
- PATENT ABSTRACTS OF JAPAN vol. 1997, no. 03, 31. März 1997 (1997-03-31) -& JP 08 294255 A (FUJITSU GENERAL LTD), 5. November 1996 (1996-11-05)

## Beschreibung

Die vorliegende Erfindung betrifft ein Isolierelement zum Auskleiden wenigstens einer Ankernut einer elektrischen Maschine nach dem Oberbegriff des Anspruchs 1. Weiterhin betrifft die vorliegende Erfindung ein Verfahren zum Einbringen von Wicklungselementen in die Nuten eines Ankers.

### Stand der Technik

Es ist bekannt, die Nuten des Ankers einer elektrischen Maschine mit möglichst dünnen Papierstreifen auszukleiden..Ein derartiges Auskleiden der Nuten dient dazu, ein Beschädigen der Wicklungselemente, beispielsweise in Form von lackierten Cu-Drähten, bei der Montage sowie beim Schränken an den scharfen Stanzkanten der Blechpakete zu vermeiden. Weiterhin bietet die eingesetzte Papierisolation in axialer Richtung eine Klemmwirkung auf die Wicklungselemente, so dass der Anker bei der Montage gewendet werden kann. Allerdings bietet eine derartige Papierisolation in der Ankernut keinen radialen Halt für die Wicklungselemente. Die dadurch mögliche radiale Lageveränderung der Wicklungselemente kann sich nachteilig auf die Ur-Unwucht des Ankers auswirken. Neben dem Einführen der Papierisolation ist noch ein weiterer Arbeitsgang erforderlich, der als "Aufweiten" bezeichnet wird, um ein Einführen der Wicklungselemente, beispielsweise in Form von Cu-Drähten, in die Nuten zu ermöglichen. Als weiterer Arbeitsschritt wird der Anker häufig noch durch Tauchrollieren mit Epoxydharz imprägniert. Dadurch werden die Wicklungselemente zusammen mit dem Papier in der Ankernut lagefixiert. Weiterhin kann durch diesen Arbeitsschritt eine thermische Anbindung an das Ankerpaket erreicht werden. Nachteilig bei dieser bekannten Vorgehensweise ist, dass das Einführen der Papierstreifen und die nachfolgenden Arbeitsschritte aufwendig sind, weswegen insbesondere bei der automatisierten Durchführung lange Taktzeiten in Kauf genommen werden müssen.

Aus der gattungsbildenden US 4,028,573 ist ein Isolierelement zum Auskleiden wenigstens einer Ankernut einer elektrischen Maschine bekannt, wobei das Isolierelement wenigstens ein Kunststoffelement aufweist, das zum Auskleiden einer Ankernut vorgesehen ist.

Aus der US 5,729,885 ist ein Rotor für eine elektrische Maschine bekannt. Er weist gestapelte Bleche mit am Umfang der Bleche angeordneten Nuten auf. Dadurch, dass diese Nuten fluchten, bilden diese Kanäle, die eine bestimmte Geometrie aufweisen.

Aus der FR 2 328 318 ist ein Isolierelement bekannt, bei dem nach Einführen des Isolierelements in Ankernuten ein Verbindungselement entfernt wird.

Aus der JP-A-08 294 255 ist ein Rotor bekannt, der Isolierröhren für eine Stabwicklung aufweist.

### Vorteile der Erfindung

Es ist vorgesehen, dass das Kunststoffelement an seiner Außenseiten einen Steg aufweist. Dieser Steg ermöglicht es, die weiteren Abschnitte der Kunststoffelemente extrem dünnwandig vorzusehen, da der Steg eine ausreichende Festigkeit ergibt. Dadurch, dass das Isolierelement wenigstens ein Kunststoffelement aufweist, das zum Auskleiden einer Ankernut vorgesehen ist, kann der Auskleidevorgang schnell durchgeführt werden, was bei einer automatisierten Durchführung kurze Taktzeiten ermöglicht. Jedes zum Auskleiden einer Ankernut vorgesehene Kunststoffelement ist rohrförmig. Die Länge der rohrförmigen Kunststoffelemente ist dabei vorzugsweise an die Länge der Ankernuten angepasst. Durch die rohrförmige Ausgestaltung der Kunststoffelemente ist eine Anpassung sowohl an die Ankernuten als auch an die Geometrie der Wicklungselemente möglich, die beispielsweise in Form von Cu-Leitern vorliegen. Die Wicklungselemente können somit definiert angeordnet werden, was sich positiv auf die Ur-Unwucht des Ankers auswirkt.

Der Steg kann dazu vorgesehen sein, die Ankernut zu verschließen, wenn das Kunststoffelement in die Ankernut eingebracht ist oder wird. Dieses Verschließen der Ankernut wirkt sich beispielsweise positiv auf das Ankergeräusch aus.

Der Innenquerschnitt des Kunststoffelements kann im Wesentlichen 8-förmig sein. Vorzugsweise stehen der obere und der untere Abschnitt der 8 dabei in Verbindung.

Das Kunststoffelement weist an seiner Innenseite vorzugsweise wenigstens eine Längsriefe auf. Durch diese wenigstens eine Längsriefe wird eine axiale Fixierung in dem Kunststoffelement ermöglicht, sowohl auf der inneren als auch auf der äußeren Seite. Weiterhin stellt die wenigstens eine Längsriefe neben einem Toleranzausgleich zwischen der Nut und den Wicklungselementen weiterhin sicher, dass die bei einer anschließenden Imprägnierung verwendete Vergussmasse die Leiter sowohl innen als auch außen umflutet. Dadurch kann eine optimale Verbindung der einzelnen Komponenten (Ankerpaket, Isolierelement und Wicklungselemente) sichergestellt werden.

Insbesondere im Hinblick auf eine automatisierte Montage kann es vorteilhaft sein, dass mehrere Kunststoffelemente durch wenigstens ein erstes Verbindungselement derart miteinander verbunden sind, dass ihre gegenseitige Lage der gegenseitigen Lage von mehreren Ankernuten entspricht.

Um ein problemloses Einführen der Wicklungselemente in die Kunststoffelemente zu ermöglichen kann das erste Verbindungselement eine oder mehrere Wicklungsführungsflächen aufweisen.

Bei einer besonders' bevorzugten Ausführungsform ist das erste Verbindungselement ringförmig. An einem ringförmigen Verbindungselement kann eine der Anzahl der Ankernuten entsprechende Anzahl von Kunststoffelementen angeordnet werden, so dass bei einer automatisierten Montage alle Ankernuten gleichzeitig mit Kunststoffelementen ausgekleidet werden können.

Insbesondere zu diesem Zweck ist es vorteilhaft, wenn das erste Verbindungselement die einen benachbarten Endabschnitte von im Wesentlichen parallel angeordneten Kunststoffelementen verbindet.

In diesem Zusammenhang kann vorgesehen sein, dass das erste ringförmige Verbindungselement die Stirnflächen mehrerer Kunststoffelemente verbindet, und dass das erste ringförmige Element Durchbrüche aufweist, die im Wesentlichen an den Querschnitt der Kunststoffelemente angepasst sind. Die erwähnten Wicklungsführungsflächen können in diesem Zusammenhang in besonders vorteilhafter Weise im Bereich der Durchbrüche vorgesehen werden. Ferner kann auf einer Seite des ringförmigen Verbindungselementes eine Materialanhäufung erreicht werden, die das Ausspritzen der dünnwandigen. Kunststoffelemente erleichtert.

Weiterhin kann ein zweites Verbindungselement vorgesehen sein. Durch dieses zweite Verbindungselement können die Kunststoffelemente über ihre gesamte Länge in ihrer gegenseitigen Lage fixiert werden.

Auch das zweite Verbindungselement ist vorzugsweise ringförmig, insbesondere dann, wenn das erste Verbindungselement ringförmig ist.

Dieses ringförmige zweite Verbindungselement kann dann die anderen benachbarten Endabschnitte der im Wesentlichen parallel angeordneten Kunststoffelemente verbinden.

Zu diesem Zweck umgibt das ringförmige zweite Verbindungselement die Kunststoffelemente vorzugsweise derart, dass die Außeriseite der Kunststoffelemente an der Innenseite des ringförmigen zweiten Verbindungselementes anliegt oder mit dieser in Verbindung steht.

Insbesondere in diesem Fall ist es vorteilhaft, dass das zweite Verbindungselement über Sollbruchstellen mit den Kunststoffelementen verbunden ist. Wenn gewünscht, kann das zweite Verbindungselement nach dem Einführen der Kunststoffelemente in die Ankernuten manuell oder von einem Montagewerkzeug abgeschert werden. Auch eine nachfolgende spanende Operation zur Entfernung des zweiten Verbindungselementes ist denkbar, beispielsweise ein Verbindungselementes ist denkbar, beispielsweise ein Überdrehen des Ankeraußendurchmessers. Durch das Zusammenwirken des ersten Verbindungselementes und des zweiten Verbindungselementes mit den Kunststoffelementen werden die derart gebildeten Isolierelemente beispielsweise beim Transport vor Beschädigungen geschützt. Weiterhin können derartige Isolierelemente in Form von Schüttgut gelagert und/oder transportiert werden, da ein Verhaken der einzelnen Isolierelemente wirksam verhindert werden kann. Im Gegensatz zu den herkömmlichen Papiereinlagen können die erfindungsgemäßen Isolierelemente somit ohne großen Aufwand mit üblichen "pick and place" Einrichtungen zugeführt werden.

Auch das zweite Verbindungselement kann wenigstens eine Führungsfläche aufweisen, die dazu vorgesehen ist, die Montage des Isolierelementes an dem Anker zu erleichtern. In diesem Zusammenhang ist es beispielsweise denkbar, dass sich ein ringförmiges zweites Verbindungselement, das an den anderen Endabschnitten der Kunststoffelemente angeordnet ist, zum Ende des Isolierelementes hin radial erweitert. In diesem Fall gleitet das ringförmige zweite Verbindungselement beim Einführen der Kunststoffelemente in die Ankernuten über die von den Ankernuten unterbrochene Ankeroberfläche.

Dadurch, dass das erfindungsgemäße Verfahren zum Einbringen von Wicklungselementen in die Nuten eines Ankers die folgenden Schritte umfasst:
a.) Einführen eines erfindungsgemäßen Isolierelementes in wenigstens einen Ankernut und dadurch Verschließen der wenigstens einen Ankernut mittels eines Steges eines Kunststoffelements des Isolierelements; und
b) Einbringen von Ankerwicklungselementen in das wenigstens eine Kunststoffelement, können, beispielsweise bei einer automatisierten Durchführung die Taktzeiten deutlich verkürzt werden. Somit wird eine einfache Möglichkeit bereitgestellt, den Anforderungen an die Nutisolierung, die mechanischen Festigkeiten beim Schränken der Leiter, der Forderung nach einem automatisierbaren Einführen der Wicklungselemente, beispielsweise in Form von Cu-Drähten, sowie der Vorfixierung der Wicklungselemente in axialer und radialer Richtung zu genügen:

Bei dem erfindungsgemäßen Verfahren ist vorzugsweise der folgende weitere Schritt vorgesehen:
c) Auffüllen von Zwischenräumen zwischen Kunststoffelementen und Ankernuten und/oder Kunststoffelementen und Wicklungselementen mit Vergussmasse.

Diese Vergussmasse kann beispielsweise durch ein Harz gebildet sein, das eine optimale Verbindung der einzelnen Komponenten sicherstellt.

Weiterhin sieht das erfindungsgemäße Verfahren vorzugsweise vor, dass zumindest ein Verbindungselement nach dem Einführen des Isolierelementes in die Nuten entfernt wird. Das zu entfernende Verbindungselement kann beispielsweise durch das ringförmige zweite Verbindungselement gebildet sein, das durch die Sollbruchstellen mit den Kunststoffelementen verbunden ist. In diesem Fall kann das ringförmige zweite Verbindungselement einfach abgeschert werden. Insbesondere beim Fehlen von Sollbruchstellen ist jedoch auch ein Spanverfahren zum Entfernen eines Verbindungselementes denkbar.

### Zeichnungen

Die Erfindung wird nachfolgend anhand der zugehörigen Zeichnung noch näher erläutert.

Es zeigt:

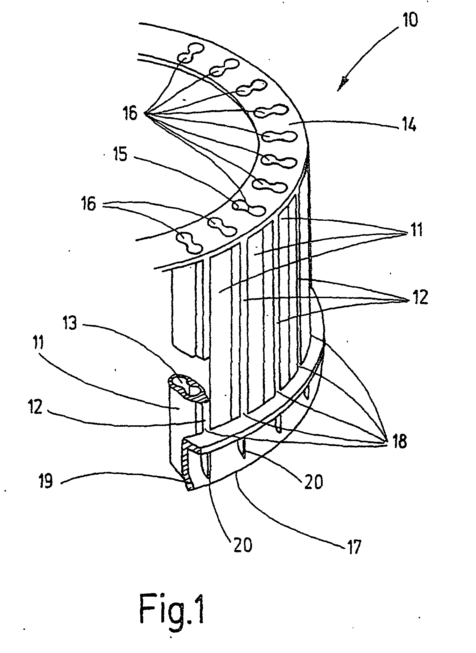

- Figur 1: ein Ausführungsbeispiel des erfindungsgemäßen Isolierelements.

### Beschreibung des Ausführungsbeispiels

In Figur 1 ist ein Abschnitt eines insgesamt kreisringförmigen Isolierelements 10 dargestellt. Das Isolierelement 10 weist eine Vielzahl von Kunststoffelementen 11 auf, die rohrförmig ausgebildet sind. Der Innenquerschnitt 13 der rohrförmigen Kunststoffelemente 11 ist im Wesentlichen 8-förmig, wie dies an dem vordersten, teilweise weggeschnittenen Kunststoffelement zu erkennen ist.

Alle Kunststoffelemente 11 weisen an ihrer Außenseite einen Steg 12 auf. Die Stege 12 ergeben eine ausreichende Festigkeit, um die restlichen Abschnitte der Kunststoffelemente 11 extrem dünnwandig ausführen zu können, wobei als Herstellungsverfahren insbesondere das Spritzgussverfahren in Frage kommt.

Die Vielzahl von parallel zueinander und insgesamt ringförmig angeordneten Kunststoffelementen 11 ist durch ein erstes ringförmiges Verbindungselement 14 miteinander verbunden. Bei der dargestellten Ausführungsform verbindet das erste ringförmige Verbindungselement 14 die Stirnflächen an dem einen Ende der Kunststoffelemente 11. Weiterhin weist das ringförmige erste Verbindungselement 14 eine Vielzahl von Durchbrüchen auf, die im Wesentlichen an den Querschnitt der Kunststoffelemente 11 angepasst sind. Obwohl dies in Figur 1 nicht näher dargestellt ist, weist das ringförmige erste Verbindungselement 14 eine Vielzahl von Wicklungsführungsflächen 15 auf, die dazu vorgesehen sind, das Einführen von Wicklungselementen zu erleichtern.

Im Bereich des anderen Endabschnittes der Kunststoffelemente 11 ist ein ebenfalls ringförmiges zweites Verbindungselement 17 vorgesehen, das die Kunststoffelemente 11 umgibt. Das ringförmige zweite Verbindungselement 17 ist über Sollbruchstellen 18 mit den Kunststoffelementen 11 verbunden. Dadurch wird ermöglicht, dass das zweite Verbindungselement 17 nach dem Einführen der Kunststoffelemente 11 in die Ankernuten durch einen einfachen Schervorgang entfernt wird. Das ringförmige zweite Verbindungselement 17 weist einen in etwa halbkreisförmigen Querschnitt auf, wobei entsprechende Zwischenwände 20 zur Versteifung des ringförmigen zweiten Verbindungselementes 17 vorgesehen sind. Durch den in etwa halbkreisförmigen Querschnitt dieses Verbindungselementes 17 wird eine Führungsfläche 19 gebildet, die sich in Richtung auf das Ende des Isolierelementes 10 hin radial erweitert. Diese Führungsfläche 19 ermöglicht es, dass das ringförmige zweite Verbindungselement 17 einfach über die Stirnflächenkante eines Ankers geschoben werden kann, um anschließend über die zylinderförmige Außenfläche des Ankers zu gleiten, wenn die Kunststoffelemente 11 in die Nuten des Arikers eingeführt werden.

Das in Figur 1 dargestellte Isolierelement 10 kann in besonders vorteilhafter Weise mit dem erfindungsgemäßen Verfahren verwendet werden, wenn dieses automatisiert durchgeführt wird. Zu diesem Zweck werden die Kunststoffelemente 11 zunächst bezüglich der Ankernuten ausgerichtet und dann werden die Kunststoffelemente 11 in die Ankernuten eingeführt, wobei das zweite Verbindungselement 17 wie erwähnt über die von den Nuten unterbrochene zylinderförmige Oberfläche des Ankers gleitet. Da das zweite Verbindungselement, nach dem Einführen der Kunststoffelemente 11 in die dann durch die Stege 12 verschlossenen Ankernuten, über die Ankeroberfläche übersteht, wird es vorzugsweise entfernt, beispielsweise durch einen Abschervorgang, der automatisch durchgeführt werden kann.

Durch das derart durchgeführte erfindungsgemäße Verfahren werden alle Nuten des Ankers gleichzeitig mit den Kunststoffelementen 11 ausgekleidet, was gegenüber dem herkömmlichen Auskleiden mit Papier einen deutlichen Zeitgewinn verursacht.

Die vorhergehende Beschreibung der Ausführungsbeipiele gemäß der vorliegenden Erfindung dient nur zu illustrativen Zwecken und nicht zum Zwecke der Beschränkung der Erfindung. Im Rahmen der Erfindung sind verschiedene Änderungen und Modifikationen möglich, solange diese ein Isolierelement mit rohrförmigen Kunststoffelementen betreffen, wobei das jeweilige Kunststoffelement an seiner Außenseite einen Steg aufweist.

## Patentansprüche

1. Isolierelement zum Auskleiden wenigstens einer Ankernut einer elektrischen Maschine, wobei das Isolierelement (10) wenigstens ein rohrförmiges Kunststoffelement (11) aufweist, das zum Auskleiden einer Ankernut vorgesehen ist, **dadurch gekennzeichnet, dass** das Kunststoffelement (11) an seiner Außenseite einen Steg (12) aufweist.

2. Isolierelement nach Anspruch 1, **dadurch gekennzeichnet, dass** die Ankernut durch den Steg (12) verschließbar ist, wenn das Kunststoffelement (11) in die Ankernut eingebracht ist.

3. Isolierelement nach Anspruch 1 oder Anspruch 2, **dadurch gekennzeichnet, dass** der Innenquerschnitt (13) des Kunststoffelements (11) im Wesentlichen 8-förmig ist.

4. Isolierelement nach einem der vorhergehenden Ansprüche, **dadurch gekennzeichnet, dass** das Kunststoffelement (11) an seiner Innenseite wenigstens eine Längsriefe aufweist.

5. Isolierelement nach einem der vorhergehenden Ansprüche, **dadurch gekennzeichnet, dass** mehrere Kunststoffelemente (11) durch wenigstens ein erstes Verbindungselement (14) derart miteinander verbunden sind, dass ihre gegenseitige Lage der gegenseitigen Lage von mehreren Ankernuten entspricht.

6. Isolierelement nach einem der vorhergehenden Ansprüche, **dadurch gekennzeichnet, dass** das erste Verbindungselement (14) eine oder mehrere Wicklungsführungsflächen (15) aufweist, die dazu vorgesehen sind, das Einführen von Wicklungselementen zu erleichtern.

7. Isolierelement nach einem der vorhergehenden Ansprüche, **dadurch gekennzeichnet, dass** das erste Verbindungselement (14) ringförmig ist.

8. Isolierelement nach einem der vorhergehenden Ansprüche, **dadurch gekennzeichnet, dass** das erste Verbindungselement (14) die einen benachbarten Endabschnitte von im Wesentlichen parallel angeordneten Kunststoffelementen (11) verbindet.

9. Isolierelement nach einem der vorhergehenden Ansprüche, **dadurch gekennzeichnet, dass** das erste ringförmige Verbindungselement (14) die Stirnflächen mehrerer Kunststoffelemente (11) verbindet, und dass das erste ringförmige Element Durchbrüche (16) aufweist, die im Wesentlichen an den Querschnitt der Kunststoffelemente (11) angepasst sind.

10. Isolierelement nach einem der vorhergehenden Ansprüche, **dadurch gekennzeichnet, dass** ein zweites Verbindungselement (17) vorgesehen ist.

11. Isolierelement nach einem der vorhergehenden Ansprüche, **dadurch gekennzeichnet, dass** das zweite Verbindungselement (17) ringförmig ist.

12. Isolierelement nach einem der vorhergehenden Ansprüche, **dadurch gekennzeichnet, dass** das ringförmige zweite Verbindungselement (17) die anderen benachbarten Endabschnitte der im Wesentlichen parallel angeordneten Kunststoffelemente (11) verbindet.

13. Isolierelement nach einem der vorhergehenden Ansprüche, **dadurch gekennzeichnet, dass** das ringförmige zweite Verbindungselement (17) die Kunststoffelemente (11) umgibt.

14. Isolierelement nach einem der vorhergehenden Ansprüche, **dadurch gekennzeichnet, dass** das zweite Verbindungselement (17) über Sollbruchstellen (18) mit den Kunststoffelementen (11) verbunden ist.

15. Isolierelement nach einem der vorhergehenden Ansprüche, **dadurch gekennzeichnet, dass** das zweite Verbindungselement(17) wenigstens eine Führungsfläche (19) aufweist, die dazu vorgesehen ist, die Montage des Isolierelementes (10) an dem Anker zu erleichtern.

16. Verfahren zum Einbringen von Wicklungselementen in die Nuten eines Ankers, mit den folgenden Schritten:
a.) Einführen eines Isolierelementes (10) nach einem der vorhergehenden Ansprüche 1 bis 15 in wenigstens eine Ankernut und dadurch Verschließen der Ankernut mittels eines Steges (12) eines Kunststoffelementes (11) des Isolierelementes (10);
b.) Einbringen von Ankerwicklungselementen in das wenigstens eine Kunststoffelement (11).

17. Verfahren nach Anspruch 16, **dadurch gekennzeichnet, dass** es den folgenden weiteren Schritt umfasst:
c.) Auffüllen von Zwischenräumen zwischen Kunststoffelementen (11) und Ankernuten und/oder Kunststoffelementen und Wicklungselementen mit Vergussmasse.

18. Verfahren nach Anspruch 16 oder 17, **dadurch gekennzeichnet, dass** zumindest ein Verbindungselement (14,17) nach dem Einfüllen des Isolierelements (10) in die Nuten entfernt wird.

## Claims

1. Insulating element for lining at least one armature slot of an electric machine, the insulating element (10) having at least one tubular plastic element (11), which is provided to line an armature slot, **characterized in that** the plastic element (11) has a web (12) on its outer side.

2. Insulating element according to Claim 1, **characterized in that** the web (12) is able to close the armature slot when the plastic element (11) has been introduced into the armature slot.

3. Insulating element according to Claim 1 or Claim 2, **characterized in that** the internal cross section (13) of the plastic element (11) is shaped substantially like the number 8.

4. Insulating element according to one of the preceding claims, **characterized in that** the plastic element (11) has at least one longitudinal rib on its inner side.

5. Insulating element according to one of the preceding claims, **characterized in that** a plurality of plastic elements (11) are connected to one another by at least one first connecting element (14) in such a way that their mutual position corresponds to the mutual position of a plurality of armature slots.

6. Insulating element according to one of the preceding claims, **characterized in that** the first connecting element (14) has one or more winding guide faces (15), which are provided to make the insertion of winding elements easier.

7. Insulating element according to one of the preceding claims, **characterized in that** the first connecting element (14) is annular.

8. Insulating element according to one of the preceding claims, **characterized in that** the first connecting element (14) connects the one adjacent end sections of plastic elements (11) arranged substantially in parallel.

9. Insulating element according to one of the preceding claims, **characterized in that** the first annular connecting element (14) connects the end faces of a plurality of plastic elements (11), and **in that** the first annular element has apertures (16), which are substantially matched to the cross section of the plastic elements (11).

10. Insulating element according to one of the preceding claims, **characterized in that** a second connecting element (17) is provided.

11. Insulating element according to one of the preceding claims, **characterized in that** the second connecting element (17) is annular.

12. Insulating element according to one of the preceding claims, **characterized in that** the annular second connecting element (17) connects the other adjacent end sections of the plastic elements (11) arranged substantially in parallel.

13. Insulating element according to one of the preceding claims, **characterized in that** the annular second connecting element (17) surrounds the plastic elements (11).

14. Insulating element according to one of the preceding claims, **characterized in that** the second connecting element (17) is connected to the plastic elements (11) via intended fracture points (18).

15. Insulating element according to one of the preceding claims, **characterized in that** the second connecting element (17) has at least one guide face (19), which is provided to make the assembly of the insulating element (10) to the armature easier.

16. Method of introducing winding elements into the slots of an armature, having the following steps:
a) inserting an insulating element (10) according to one of the preceding Claims 1 to 15 into at least one armature slot and thereby closing the armature slot by means of a web (12) of a plastic element (11) of the insultaing element (10);
b) introducing armature winding elements into the at least one plastic element (11).

17. Method according to Claim 16, **characterized in that** it comprises the following further step:
c) filling up interspaces between plastic elements (11) and armature slots and/or plastic elements and winding elements with potting compound.

18. Method according to Claim 16 or 17, **characterized in that** at least one connecting element (14, 17) is removed following the insertion of the insulating element (10) into the slots.

## Revendications

1. Elément d'isolation pour revêtir au moins une rainure d'induit d'une machine électrique, cet élément d'isolation (10) présentant au moins un élément en matière plastique (11) de forme tubulaire prévu pour revêtir une rainure d'induit,
**caractérisé en ce que**
l'élément en matière plastique (11) présente sur sa face externe une barrette (12).

2. Elément d'isolation selon la revendication 1,
**caractérisé en ce que**
la rainure d'induit peut être obturée par la barrette (12) quand l'élément en matière plastique (11) est introduit dans la rainure d'induit.

3. Elément d'isolation selon la revendication 1 ou 2,
**caractérisé en ce que**
la section interne (13) de l'élément en matière plastique (11) a essentiellement la forme d'un huit.

4. Elément d'isolation selon une des revendications précédentes,
**caractérisé en ce que**
l'élément en matière plastique (11) présente sur sa face interne au moins une cannelure longitudinale.

5. Elément d'isolation selon une des revendications précédentes,
**caractérisé en ce que**
plusieurs éléments en matière plastique (11) sont reliés entre eux par au moins un premier élément de liaison (14), de manière que leur position relative correspondante à la position relative de plusieurs rainures d'induit.

6. Elément d'isolation selon une des revendications précédentes,
**caractérisé en ce que**
le premier élément de liaison (14) présente une ou plusieurs portées de guidage d'enroulement (15) prévues pour faciliter l'introduction de l'élément d'enroulement.

7. Elément d'isolation selon une des revendications précédentes,
**caractérisé en ce que**
le premier élément de liaison (14) a une forme annulaire.

8. Elément d'isolation selon une des revendications précédentes,
**caractérisé en ce que**
le premier élément de liaison (14) relie les parties d'extrémité proches, situées d'un même côté, d'éléments en matière plastique (11) disposés essentiellement en parallèle.

9. Elément d'isolation selon une des revendications précédentes,
**caractérisé en ce que**
le premier élément de liaison (14) de forme tubulaire relie les faces frontales de plusieurs éléments en matière plastique (11), et ce premier élément présente des ouvertures (16) qui sont adaptées essentiellement à la section des éléments en matière plastique (11).

10. Elément d'isolation selon une des revendications précédentes,
**caractérisé par**
un second élément de liaison (17).

11. Elément d'isolation selon une des revendications précédentes,
**caractérisé en ce que**
le second élément de liaison (17) a une forme annulaire.

12. Elément d'isolation selon une des revendications précédentes,
**caractérisé en ce que**
le second élément de liaison (17) de forme annulaire relie les autres parties d'extrémité proches des éléments en matière plastique montés essentiellement en parallèle.

13. Elément d'isolation selon une des revendications précédentes,
**caractérisé en ce que**
le second élément de liaison (17) de forme annulaire entoure les éléments en matière plastique (11).

14. Elément d'isolation selon une des revendications précédentes,
**caractérisé en ce que**
le second élément de liaison (17) est relié aux éléments en matière plastique (11) par des zones de rupture imposée (18).

15. Elément d'isolation selon une des revendications précédentes,
**caractérisé en ce que**
le second élément de liaison (17) présente au moins une portée de guidage (19) prévue pour faciliter le montage de l'élément d'isolation (10) sur l'induit.

16. Procédé pour introduire des éléments d'enroulement dans les rainures d'un induit, présentant les étapes suivantes :
a) introduction d'un élément d'isolation (10) selon une des revendications précédentes (1 à 15), dans au moins une rainure d'induit, en obturant ainsi cette rainure par une barrette (12) d'un élément en matière plastique (11) de l'élément d'isolation (10),
b) introduction des éléments d'enroulement de l'induit dans l'élément en matière plastique (11) au nombre d'un au moins.

17. Procédé selon la revendication 16,
**caractérisé en ce qu'**
il présente l'étape supplémentaire suivante :
c) remplissage par de la masse fondue des espaces intermédiaires existant entre des éléments en matière plastique (11) et des rainures d'induit et/ou entre des éléments en matière plastique et des éléments d'enroulement.

18. Procédé selon la revendication 16 ou 17,
**caractérisé en ce qu'**
après le remplissage des rainures de l'élément d'isolation (10), au moins un élément de liaison (14, 17) est retiré.
